# EUROPÄISCHE PATENTSCHRIFT

(11) **EP 3 597 983 B1**
(45) Veröffentlichungstag und Bekanntmachung des Hinweises auf die Patenterteilung: **14.10.2020**
(21) Anmeldenummer: 19177008.0
(22) Anmeldetag: 28.05.2019
(51) Int. Cl.: F16P 3/14, G01V 8/20

(54) **SENSORSYSTEM UND DISTANZSENSORMODUL**
SENSOR SYSTEM AND DISTANCE SENSOR MODULE
SYSTÈME DE CAPTEUR ET MODULE DE CAPTEUR DE DISTANCE

(30) Priorität: 18.07.2018 DE 102018117372
(43) Veröffentlichungstag der Anmeldung: 22.01.2020
(73) Patentinhaber: SICK AG, 79183 Waldkirch (DE)
(72) Erfinder: Gebauer, Jens, 79183 Waldkirch (DE)

(56) Entgegenhaltungen:
- WO-A1-00/54077

## Beschreibung

Die vorliegende Erfindung betrifft ein Distanzsensormodul gemäß dem Oberbegriff von Anspruch 1 und ein Sensorsystem gemäß dem Oberbegriff von Anspruch 5.

Zur Absicherung von Werkzeugen an Robotern bzw. der Prozesse der Werkzeuge mit den Werkstücken werden häufig berührungslos wirkende Schutzeinrichtungen verwendet.

Die Absicherung mit nur einer beispielsweisen immer gleichen Sensoranordnung stellt eine Herausforderung dar, weil die Geometrien der Werkzeuge und Werkstücke applikationsspezifisch sehr unterschiedlich sind.

Die EP 1 813 967 B1 offenbart ein Lichtgitter mit Modulen, die aneinandergereiht werden können.

Die US 2001/0040213 A1 offenbart Lichtgittermodule, die über ein Drehgelenk miteinander verbindbar sind.

Die DE 10 2015 112 656 A1 offenbart einen Roboter mit Einzelsensoren an einem Roboterarm.

Die WO00/54077A1 offenbart einen Lichtvorhang, wobei der Lichtvorhang eine Licht emittierende Anordnung und eine entsprechende Licht detektierende Anordnung umfasst, wobei die Licht emittierende Anordnung und die Licht detektierende Anordnung miteinander verbindbare erste und zweite Lichtvorhangmodule mit zwei abgerundeten distalen Enden aufweist, die eingerichtet sind, elektrisch und mechanisch miteinander oder mit einer Verbindungsleitung verbunden zu werden.

Eine Aufgabe der Erfindung besteht darin, ein Distanzsensormodul bereitzustellen, welches mit anderen Distanzsensormodulen kombinierbar ist, um ein Schutzfeld um ein Werkzeug oder ein Werkstück an einem Roboterarm zu bilden.

Die Aufgabe wird gemäß Anspruch 1 gelöst durch ein Distanzsensormodul, wobei das Distanzsensormodul ein Gehäuse mit mindestens einem Distanzsensor aufweist, wobei das Gehäuse mindestens ein Drehgelenk mit einer Drehachse aufweist und zwei entgegengesetzte Verbindungsstellen aufweist, wobei jede Verbindungsstelle ein Verbindungselement aufweist zur Verbindung mit einem benachbarten Distanzsensormodul, wobei an dem Gehäuse ein längsverstellbarer Haltearm angeordnet ist und der längsverstellbare Haltearm an dem Drehgelenk befestigt ist.

Die Aufgabe wird weiter gemäß Anspruch 5 gelöst durch ein Sensorsystem mit optoelektronischen Distanzsensormodulen zur Überwachung eines Gefahrenbereichs an einem bewegbaren Maschinenteil mit mindestens einem Schutzfeld, wobei die optoelektronischen Distanzsensoren ringförmig in einem ersten Ring an dem bewegbaren Maschinenteil angeordnet sind, wobei an dem bewegbaren Maschinenteil ein Werkzeug angeordnet ist, wobei die Distanzsensormodule jeweils ein Gehäuse mit mindestens einem Distanzsensor aufweisen, wobei das Gehäuse mindestens ein Drehgelenk mit einer Drehachse aufweist und zwei entgegengesetzte Verbindungsstellen aufweist, wobei jede Verbindungsstelle ein Verbindungselement aufweist zur Verbindung mit einem benachbarten Distanzsensormodul, wobei an dem Gehäuse ein längsverstellbarer Haltearm angeordnet ist und der längsverstellbare Haltearm an dem Drehgelenk befestigt ist.

Das Sensorsystem dient zum sicheren Überwachen des Gefahrenbereichs bzw. eines Überwachungsbereichs des bewegbaren Maschinenteils.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau einer Auswerteeinheit zur Fehleraufdeckung und zur Funktionsprüfung gewährleistet. Der abstandsmessende Sensor bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Sensor bzw. Distanzsensor optional über eine Sensortestung.

Eine Auswerteeinheit erkennt Schutzfeldverletzungen und kann ein sicherheitsgerichtetes Abschaltsignal ausgeben, um eine gefahrbringende Bewegung des Teils bzw. des Roboters zu stoppen bzw. das Teil oder den Roboter abzubremsen. Das kann z. B. über sichere Schaltsignale, z.B. OSSD-Signale (Output Safety Switching Device-Signale) oder sichere Distanzdaten, Abstandsdaten bzw. sichere Ortsdaten des Ein griffsereignisses realisiert werden. Beispielsweise ist die Auswerteeinheit zweikanalig ausgebildet.

Die Distanzsensormodule bilden einen Halter, in den die berührungslos wirkenden Distanzsensoren integrierbar sind. Aufgrund des Gehäuses des Distanzsensormoduls kann eine bewegliche Kette gebildet werden, mit der unterschiedlichste Anordnungen der Distanzsensormodule realisiert werden können. Damit lassen sich Mensch-Roboter-Kollaborations-Anwendungen mit unterschiedlichen Roboter-Werkzeuggeometrien oder Werkstückgeometrien absichern.

Das Gehäuse besteht aus mindestens zwei Gehäuseteilen, die über das Drehgelenk miteinander verbunden sind.

Die mehreren Distanzsensoren sind mit einer Auswerteeinheit zur Auswertung der Distanzsensoren verbunden. Die Leitungsführung der einzelnen Distanzsensoren kann einfach über das Drehgelenk erfolgen. Dabei müssen die Leitungen nicht unterbrochen werden, da die mechanisch lösbare Schnittstelle zum Aufbau des Sensorsystems nicht das Drehgelenk ist, sondern die lösbare Verbindungsstelle.

Das Sensorsystem gemäß vorliegender Erfindung kann der Anwender selbst aufbauen, entsprechend den vorgegebenen geometrischen Gegebenheiten. Durch die Drehgelenke lässt sich die Geometrie genau an vorgegebene mechanische Adapter anpassen.

Jedoch kann es auch vorgesehen sein, das Sensorsystem direkt beim Hersteller in der Produktion aufzubauen und manipulationssicher an den Anwender auszuliefern.

Die Distanzsensoren sind beispielsweise entlang dem Ring beabstandet zueinander angeordnet, wobei jeder Sensor ein flächiges Schutzfeld bildet. Die Schutzfelder nähern zusammen beispielsweise die Mantelfläche eines Zylinders oder Kegelstumpfes oder Rotationshyperboloids an.

Optional weisen die Distanzsensoren gleichmäßige Abstände auf. Durch die gleichmäßigen Abstände der Sensoren und eine jeweils identische Winkelausrichtung der Detektionsstrahlen wird eine nahezu gleichmäßige Auflösung innerhalb des Schutzfeldes erreicht.

Die Distanzsensoren sind berührungslos wirkende abstandsmessende Distanzsensoren, wobei die Distanzsensoren einen Detektionsstrahl zum Erfassen von Objekten im Überwachungsbereich aufweisen.

Die Distanzsensoren können jeweils ein linienförmiges oder flächiges Schutzfeld aufweisen. Das flächige Schutzfeld ist fächerförmig ausgebildet mit einem bestimmten Öffnungswinkel von beispielsweise 2° bis 20°.

In Weiterbildung der Erfindung weist das Gehäuse mindestens zwei Distanzsensoren auf, wobei zwischen den Distanzsensoren das Drehgelenk angeordnet ist.

Die Distanzsensoren sind dabei optional so im Gehäuse angeordnet, dass bei einer Verbindung von Distanzsensormodulen bei gleichen Gelenkwinkeln äquidistante Abstände, also gleiche Abstände zwischen den optischen Achsen der Distanzsensoren, der Distanzsensoren eines Distanzsensormoduls und benachbarter Distanzsensormodule vorliegen. Durch die Anordnung von mindestens zwei Distanzsensoren pro Distanzsensormodul wird die Anzahl der Drehgelenke quasi halbiert.

In Weiterbildung der Erfindung ist das Verbindungselement eine elektrische und mechanische Steckverbindung. Dadurch ist eine einfache elektrische Verbindung zwischen den Modulen bereitgestellt. Die Steckverbindung weist hierzu optional Rastmittel auf, um die Verbindung mechanisch zu sichern. Die Steckverbindung definiert dabei die mechanischen Abstände zwischen den Distanzsensoren.

In Weiterbildung der Erfindung ist zwischen den Distanzsensormodulen mindestens ein Distanzstück angeordnet. Dadurch kann ein Abstand der Distanzsensormodule zueinander eingestellt werden. Durch eine Verwendung mehrerer Distanzstücke kann der Abstand modular vergrößert werden. Durch die Distanzstücke wird ein modulares Sensorsystem gebildet, welches flexibel an die gewünschten Abmessungen und an die gewünschte Anzahl an Distanzsensoren angepasst werden kann.

Gemäß der Erfindung ist an mindestens einem Gehäuse ein längsverstellbarer Haltearm angeordnet. Durch den Halterarm kann das Distanzsensormodul an dem Roboterarm bzw. einem Aufnahmekörper des Roboterarms befestigt werden. Der Haltearm ist dabei längenverstellbar ausgebildet. Bevorzugt ist jedes Distanzsensormodul mit jeweils einem Haltearm an dem Aufnahmekörper befestigt.

Gemäß der Erfindung ist der längsverstellbare Haltearm an dem Drehgelenk befestigt. Dadurch ist die Drehachse des Drehgelenks identisch mit der Befestigungsachse des Haltearms.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Distanzsensormodul mit einem Distanzsensor und einem Drehgelenk;
- Figur 2: ein Distanzsensormodul mit zwei Distanzsensoren und einem Drehgelenk zwischen den Distanzsensoren;
- Figur 3: ein Sensorsystem aus Distanzsensormodulen;
- Figur 4: ein Sensorsystem aus Distanzsensormodulen und Haltearmen;

In den nachfolgenden Figuren sind identische Teile mit identischen Bezugszeichen versehen.

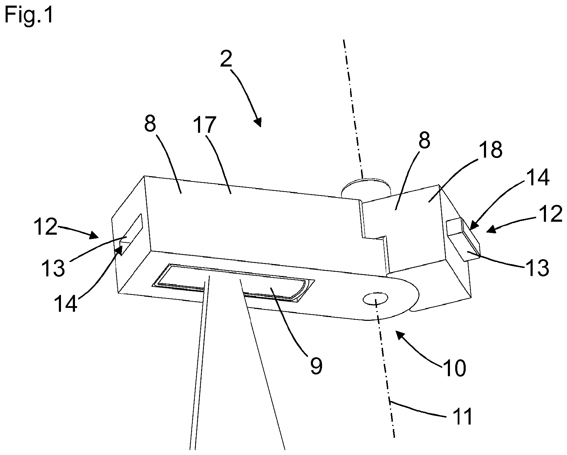

Figur 1 zeigt ein Distanzsensormodul 2, wobei das Distanzsensormodul 2 ein Gehäuse 8 mit mindestens einem Distanzsensor 9 aufweist, wobei das Gehäuse 8 mindestens ein Drehgelenk 10 mit einer Drehachse 11 aufweist und zwei entgegengesetzt angeordnete Verbindungsstellen 12 aufweist, wobei jede Verbindungsstelle 12 ein Verbindungselement 13 aufweist zur Verbindung mit einem benachbarten Distanzsensormodul.

Das Gehäuse 8 besteht aus mindestens zwei Gehäuseteilen 17, 18 die über das Drehgelenk 10 miteinander verbunden sind.

Die Distanzsensoren 9 sind berührungslos wirkende abstandsmessende Distanzsensoren 9, wobei die Distanzsensoren 9 einen Detektionsstrahl zum Erfassen von Objekten im Überwachungsbereich aufweisen.

Gemäß Figur 1 ist das Verbindungselement 13 eine elektrische und mechanische Steckverbindung 14. Dadurch ist eine einfache elektrische Verbindung zwischen den Modulen 2 bereitgestellt. Die Steckverbindung 14 weist hierzu optional Rastmittel auf, um die Verbindung mechanisch zu sichern. Die Steckverbindung 14 definiert dabei die mechanischen Abstände zwischen den Distanzsensoren 9.

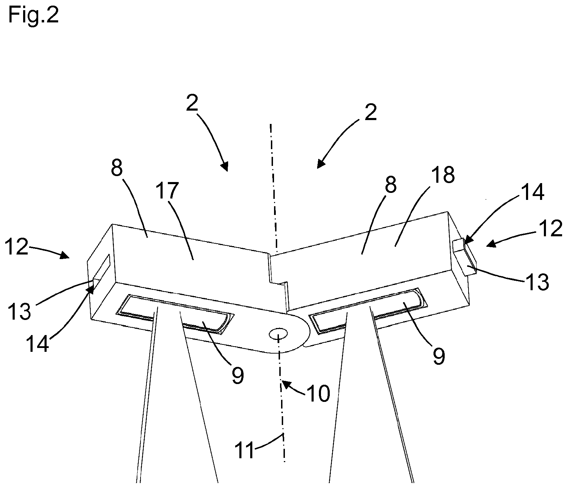

Gemäß Figur 2 weist das Gehäuse 8 mindestens zwei Distanzsensoren 9 auf, wobei zwischen den Distanzsensoren 9 das Drehgelenk 10 angeordnet ist.

Die Distanzsensoren 9 sind dabei optional so im Gehäuse 8 angeordnet, dass bei einer Verbindung von Distanzsensormodulen 2 bei gleichen Gelenkwinkeln äquidistante Abstände, also gleiche Abstände zwischen den optischen Achsen der Distanzsensoren 9 eines Distanzsensormoduls 2 und benachbarter Distanzsensormodule 2 vorliegen. Durch die Anordnung von mindestens zwei Distanzsensoren 9 pro Distanzsensormodul 2 wird die Anzahl der Drehgelenke 10 quasi halbiert.

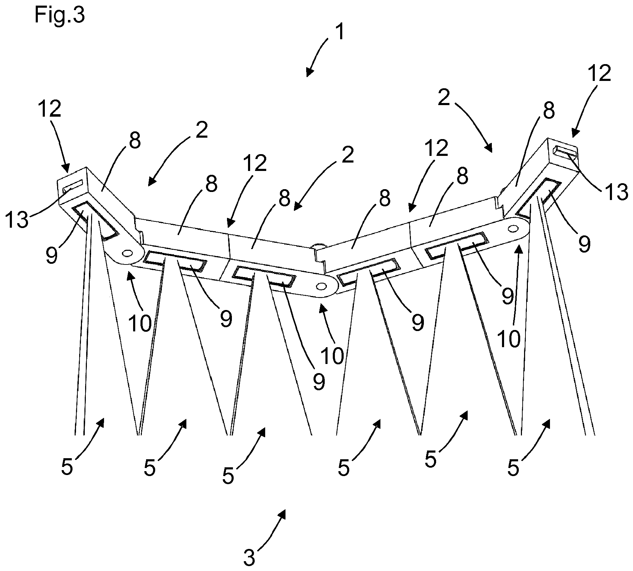

Figur 3 zeigt ein Sensorsystem 1 mit optoelektronischen Distanzsensormodulen 2 zur Überwachung eines Gefahrenbereichs 3 an einem bewegbaren Maschinenteil mit mindestens einem Schutzfeld 5, wobei die optoelektronischen Distanzsensoren 9 ringförmig in einem ersten Ring an dem bewegbaren Maschinenteil angeordnet sind, wobei an dem bewegbaren Maschinenteil ein Werkzeug angeordnet ist, wobei die Distanzsensormodule 2 jeweils ein Gehäuse 8 mit mindestens einem Distanzsensor 9 aufweisen, wobei das Gehäuse 8 mindestens ein Drehgelenk 10 mit einer Drehachse aufweist und zwei entgegengesetzte Verbindungsstellen 12 aufweist, wobei jede Verbindungsstelle 12 ein Verbindungselement 13 aufweist zur Verbindung mit einem benachbarten Distanzsensormodul 2.

Das Sensorsystem 1 dient zum sicheren Überwachen des Gefahrenbereichs 3 bzw. eines Überwachungsbereichs des bewegbaren Maschinenteils.

Die Distanzsensoren 9 bilden gemäß Figur 3 einen Halter, in den die berührungslos wirkenden Distanzsensoren 9 integrierbar sind. Aufgrund des Gehäuses 8 des Distanzsensormoduls 2 kann eine bewegliche Kette gebildet werden, mit der unterschiedlichste Anordnungen der Distanzsensormodule 2 realisiert werden können. Damit lassen sich Mensch-Roboter-Kollaborations-Anwendungen mit unterschiedlichen Roboter-Werkzeuggeometrien oder Werkstückgeometrien absichern.

Die mehreren Distanzsensoren 9 sind mit einer Auswerteeinheit zur Auswertung der Distanzsensoren 9 verbunden. Die Leitungsführung der einzelnen Distanzsensoren 9 kann einfach über das Drehgelenk 10 erfolgen. Dabei müssen die Leitungen nicht unterbrochen werden, da die mechanisch lösbare Schnittstelle zum Aufbau des Sensorsystems 1 nicht das Drehgelenk 10 ist, sondern die lösbare Verbindungsstelle 12.

Das Sensorsystem 1 gemäß Figur 3 kann der Anwender selbst aufbauen, entsprechend den vorgegebenen geometrischen Gegebenheiten. Durch die Drehgelenke 10 lässt sich die Geometrie genau an vorgegebene mechanische Adapter anpassen.

Die Distanzsensoren 9 können jeweils ein linienförmiges oder flächiges Schutzfeld 5 aufweisen. Das flächige Schutzfeld 5 ist fächerförmig ausgebildet mit einem bestimmten Öffnungswinkel von beispielsweise 2° bis 20°.

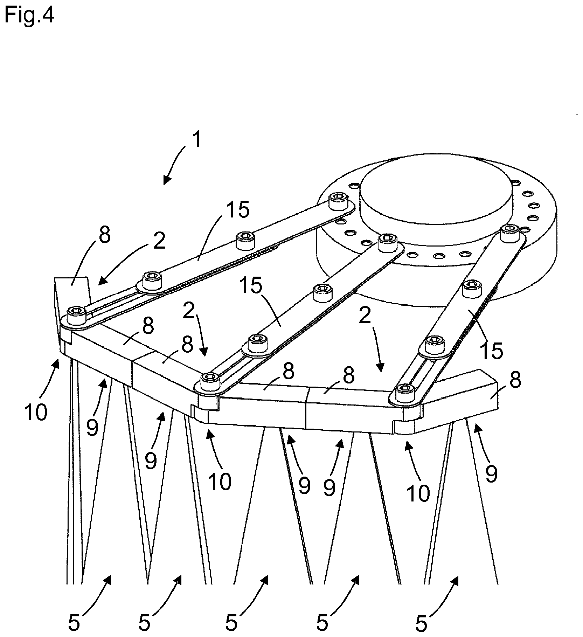

Gemäß Figur 4 ist an mindestens einem Gehäuse 8 ein längsverstellbarer Haltearm 15 angeordnet. Durch den Halterarm 15 kann das Distanzsensormodul 2 an dem Roboterarm bzw. einem Aufnahmekörper des Roboterarms befestigt werden. Der Haltearm 15 ist dabei optional längenverstellbar ausgebildet. Bevorzugt ist jedes Distanzsensormodul 2 mit jeweils einem Haltearm 15 an dem Aufnahmekörper befestigt.

Gemäß Figur 4 ist der längsverstellbare Haltearm 15 an dem Drehgelenk 10 befestigt. Dadurch ist die Drehachse des Drehgelenks 10 identisch mit der Befestigungsachse des Haltearms.

Die Distanzsensoren 9 sind beispielsweise gemäß Figur 4 entlang dem Ring beabstandet zueinander angeordnet, wobei jeder Distanzsensor ein flächiges Schutzfeld bildet. Die Schutzfelder nähern zusammen beispielsweise die Mantelfläche eines Zylinders oder Kegelstumpfes oder Rotationshyperboloids an

Optional weisen die Distanzsensoren 9 gleichmäßige Abstände auf. Durch die gleichmäßigen Abstände der Distanzsensoren 9 und eine jeweils identische Winkelausrichtung der Detektionsstrahlen wird eine nahezu gleichmäßige Auflösung innerhalb des Schutzfeldes 5 erreicht.

Gemäß einer nicht dargestellten Ausführungsform ist zwischen den Distanzsensormodulen mindestens ein Distanzstück angeordnet. Dadurch kann ein Abstand der Distanzsensormodule zueinander bzw. ein Abstand der Distanzsensoren zueinander eingestellt werden. Durch eine Verwendung mehrerer Distanzstücke kann der Abstand modular vergrößert werden. Durch die Distanzstücke wird ein modulares Sensorsystem gebildet, welches flexibel an die gewünschten Abmessungen und an die gewünschte Anzahl an Distanzsensoren angepasst werden kann.

Bezugszeichen:
- 1: Sensorsystem
- 2: Distanzsensormodule
- 3: Gefahrenbereich
- 5: Schutzfeld
- 8: Gehäuse
- 9: Distanzsensor
- 10: Drehgelenk
- 11: Drehachse
- 12: Verbindungsstellen
- 13: Verbindungselement
- 14: Steckverbindung
- 15: Haltearm
- 16: Distanzstück
- 17: Gehäuseteil
- 18: Gehäuseteil

## Patentansprüche

1. Distanzsensormodul (2) wobei das Distanzsensormodul (2) ein Gehäuse (8) mit mindestens einem Distanzsensor (9) aufweist, wobei das Gehäuse (8) mindestens ein Drehgelenk (10) mit einer Drehachse (11) aufweist und zwei am Gehäuse (8) zueinander entgegengesetzt angeordnete Verbindungsstellen (12) aufweist, wobei jede Verbindungsstelle (12) ein Verbindungselement (13) aufweist zur Verbindung mit einem benachbarten Distanzsensormodul (2), **dadurch gekennzeichnet, dass** an dem Gehäuse (8) ein längsverstellbarer Haltearm (15) angeordnet ist und der längsverstellbare Haltearm (15) an dem Drehgelenk (10) befestigt ist.

2. Distanzsensormodul (2) nach Anspruch 1, **dadurch gekennzeichnet, dass** das Gehäuse mindestens zwei Distanzsensoren aufweist, wobei zwischen den Distanzsensoren das Drehgelenk angeordnet ist.

3. Distanzsensormodul (2) nach mindestens einem der vorhergehenden Ansprüche, **dadurch gekennzeichnet, dass** das Verbindungselement (13) eine elektrische und eine mechanische Steckverbindung (14) ist.

4. Distanzsensormodul (2) nach mindestens einem der vorhergehenden Ansprüche, **dadurch gekennzeichnet, dass** zwischen den Distanzsensormodulen mindestens ein Distanzstück angeordnet ist.

5. Sensorsystem (1) mit optoelektronischen Distanzsensormodulen (2) zur Überwachung eines Gefahrenbereichs (3) an einem bewegbaren Maschinenteil mit mindestens einem Schutzfeld (5), wobei die optoelektronischen Distanzsensormodule (2) ringförmig in einem Ring an dem bewegbaren Maschinenteil (4) angeordnet sind, wobei an dem bewegbaren Maschinenteil ein Werkzeug angeordnet ist,
**dadurch gekennzeichnet, dass**
die Distanzsensormodule nach einem der Ansprüche 1 bis 4 ausgebildet sind.

## Claims

1. Distance sensor module (2), the distance sensor module (2) having a housing (8) with at least one distance sensor (9), the housing (8) having at least one swivel joint (10) with an axis of rotation (11) and having two connecting points (12) arranged opposite one another on the housing (8), each connection point (12) having a connection element (13) for connection to an adjacent distance sensor module (2), **characterized in that** a longitudinally adjustable holding arm (15) is arranged on the housing (8) and the longitudinally adjustable holding arm (15) is attached to the swivel joint (10).

2. Distance sensor module (2) according to claim 1, **characterized in that** the housing has at least two distance sensors, the swivel joint being arranged between the distance sensors.

3. Distance sensor module (2) according to at least one of the preceding claims, **characterized in that** the connecting element (13) is an electrical and a mechanical plug-in connection (14).

4. Distance sensor module (2) according to at least one of the preceding claims, **characterized in that** at least one spacer is arranged between the distance sensor modules.

5. Sensor system (1) with optoelectronic distance sensor modules (2) for monitoring a danger area (3) on a movable machine part with at least one protective field (5), wherein the optoelectronic distance sensor modules (2) are arranged in a ring on the movable machine part (4), wherein a tool is arranged on the movable machine part, **characterized in that** the distance sensor modules are designed according to one of the claims 1 to 4.

## Revendications

1. Module de capteur de distance (2), le module de capteur de distance (2) présentant un boîtier (8) avec au moins un capteur de distance (9), le boîtier (8) présentant au moins une articulation pivotante (10) avec un axe de rotation (11) et deux points de connexion (12) disposés en face l'un de l'autre sur le boîtier (8), chaque point de connexion (12) présentant un élément de connexion (13) pour la connexion à un module de capteur de distance (2) voisin, **caractérisé en ce qu'**un bras de maintien (15) réglable en longueur est disposé sur le boîtier (8) et le bras de maintien (15) réglable en longueur est fixé à l'articulation pivotante (10).

2. Module de capteur de distance (2) selon la revendication 1, **caractérisé en ce que** le boîtier comporte au moins deux capteurs de distance, l'articulation pivotante étant disposée entre les capteurs de distance.

3. Module de capteur de distance (2) selon au moins une des revendications précédentes, **caractérisé en ce que** l'élément de connexion (13) est une connexion électrique et une connexion mécanique enfichable (14).

4. Module de capteur de distance (2) selon au moins une des revendications précédentes, **caractérisé en ce qu'**au moins une entretoise est disposée entre les modules de capteur de distance.

5. Système de capteurs (1) avec des modules de capteurs de distance optoélectroniques (2) pour la surveillance d'une zone dangereuse (3) sur une partie de machine mobile avec au moins un champ de protection (5), les modules de capteurs de distance optoélectroniques (2) étant disposés en anneau sur la partie de machine mobile (4), un outil étant disposé sur la partie de machine mobile, caractérisé ence que les modules de capteurs de distance sont conçus selon l'une des revendications 1 à 4.
